# EUROPEAN PATENT APPLICATION

(11) **EP 1 978 579 A2**
(43) Date of publication of application: **08.10.2008**
(21) Application number: 08102488.7
(22) Date of filing: 11.03.2008
(51) Int. Cl.: H01M 4/02, H01M 4/04, H01M 10/40

(54) **Electrode for battery and fabricating method thereof**

(30) Priority: 19.03.2007 KR 20070026724
(71) Applicant: Samsung SDI Co., Ltd., Suwon-si, Gyeonggi-do (KR)
(72) Inventor: Jeong, Dong-Ho c/o Legal & IP Team, Suwon-si Gyeonggi-do (KR)
(74) Representative: Walaski, Jan Filip

(57) **Abstract**

An electrode for a battery includes a thin plate current collector and an active material layer coated on the current collector. The current collector is provided at a top surface with a coated current collector part and an uncoated current collector part adjacent to the coated current collector part. The uncoated current collector part has less yield stress than the coated current collector part.

## Description

The present invention relates to an electrode for a battery. More particularly, the present invention relates to a current collector used for an electrode of a secondary battery.

A secondary battery used as a power source for electronic appliances has an electrode unit that includes an anode, a cathode, and a separator disposed between the anode and the cathode.

Each of the anode and the cathode is structured by coating an active material on a current collector formed of metal. Generally, the current collector of the anode is formed of copper or aluminum and coated with a carbon-based active material. The current collector of the cathode is formed of aluminum and coated with an active material, such as LiCoO₂, LiMnO₂, or LiNiO₂.

The active material is coated in a slurry form together with materials, such as a conductive agent, a binder, a solvent, and the like so that it can be effectively coated on the current collector. The current collector coated with the active material slurry is dried in a drying furnace, after which the current collector is pressed flat by a pressing machine, for example.

When pressing the current collector, the electrode may be bent such that a defect occurs during a winding process of the electrode. As a result, productivity is reduced, as is charge and discharge efficiency.

The present invention has been made in an effort to provide a secondary battery having an electrode that is designed to minimize a difference between an amount of elongation of a part coated with an active material and an uncoated part not coated with an active material.

In an exemplary embodiment of the present invention, an electrode for a battery includes a thin plate current collector and an active material layer coated on the current collector. The current collector is provided at a top surface with a coated current collector part and an uncoated current collector part adjacent to the coated current collector part. The uncoated current collector part has a yield stress that is less than that of the coated current collector part.

In another exemplary embodiment of the present invention, a method of fabricating an electrode includes forming a current collector, annealing an edge of the current collector, coating an active material on the current collector, and pressing the current collector on which the active material has been coated.

The uncoated current collector part may have greater elongation ratio than that of the coated current collector part.

The uncoated current collector part may have less residual stress than that of the coated current collector part.

When the yield stress of the coated current collector part is σ1 and the yield stress of the uncoated current collector part is σ2, the condition of 1.5≤σ1/σ2≤7 may be satisfied.

The current collector may be formed of aluminum.

The current collector may be formed of copper.

The battery may be fabricated by a positive electrode and a negative electrode that are stacked on one another with a separator interposed therebetween, and then the positive electrode, the negative electrode, and the separator are rolled up.

The annealing of the edge may be performed before the active material is coated.

The annealing of the edge may be performed after the active material has been coated.

During the annealing of the edge, the current collector may be heated by radiant heat.

A more complete appreciation of the present invention, and many of the attendant advantages thereof, will be readily apparent as the present invention becomes better understood by reference to the following detailed description when considered in conjunction with the accompanying drawings in which like reference symbols indicate the same or similar components, wherein:
FIG. 1 is a perspective view of an electrode for a battery according to an exemplary embodiment of the present invention.
FIG. 2 is a schematic diagram of an electrode fabrication apparatus for fabricating an electrode according to an exemplary embodiment of the present invention.
FIG. 3 is a perspective view of a heating member according to an exemplary embodiment of the present invention.
FIG. 4 is a perspective view of a current collector according to an exemplary embodiment of the present invention.
FIG. 5 is a graph of elongation amounts and yield load of uncoated and coated parts of a current collector according to an exemplary embodiment of the present invention.
FIG. 6 is a plain view of a current collector according to an exemplary embodiment of the present invention.
FIG. 7 is a graph of yield load to elongation amounts at several points shown FIG 6.
FIG. 8 is a graph of yield load distribution along width direction of a current collector.

The present invention is described more fully hereinafter with reference to the accompanying drawings, in which exemplary embodiments of the present invention are shown.

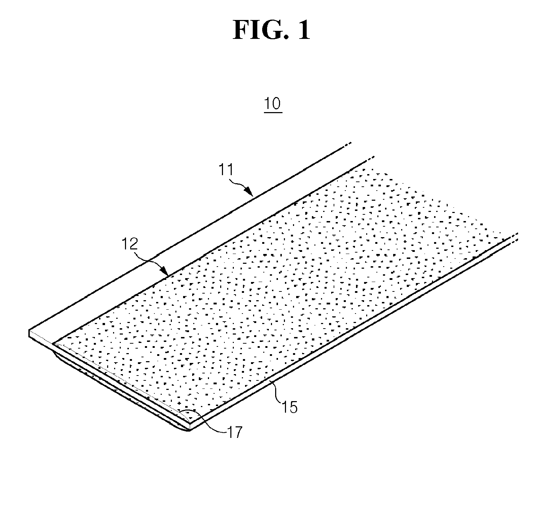

FIG. 1 is a perspective view of an electrode for a battery according to an exemplary embodiment of the present invention.

An electrode 10 used as a positive electrode or negative electrode of a rechargeable battery includes a current collector 15 and an active material layer 17 formed on the current collector 15. The active material layer 17 is not formed on an entire surface of the current collector 15. That is, the electrode 10 has a part 12 coated with an active material and an uncoated part 11 not coated with an active material, thereby exposing the current collector 15.

The current collector 15 is formed of aluminum when the electrode 10 is used as a positive electrode, while the current collector 15 is formed of copper or aluminum when the electrode 10 is used as a negative electrode.

When the electrode 10 is used as a positive electrode, the active material layer 17 is formed of a slurry including an active material, such as LiCoO₂, LiMnO₂, or LiNiO₂, a conductive agent, and a binder. When the electrode 10 is used as a negative electrode, the active material layer 17 is formed of a slurry including a carbon-based material, a conductive agent, and a binder.
The current collector 15 is provided in a strip configuration extending in a direction, and the uncoated part 11 is formed along a longitudinal edge of the current collector 15.

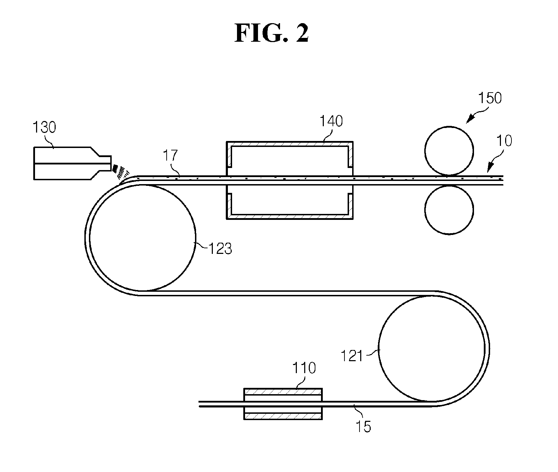

A method for fabricating the electrode 10 is described below with reference to FIG. 2. An apparatus for manufacturing the electrode 10 for a battery according to an exemplary embodiment of the present invention includes a heating member 110 that is installed at an extreme end to heat the current collector 15, a plurality of rollers 121 and 123 for transferring the current collector 15, an active material coating member 130 installed adjacent to the roller 123, a drying furnace 140 for drying the current collector 15 on which the active material layer 17 is formed, and a pressing member 150 for pressing the dried current collector 15.

An edge of the current collector 15 is heated by the heating member 110 installed at the extreme end (of the apparatus), and subsequently, the current collector 15 is transferred toward the coating member 130 by the rollers 121 and 123. Since the heated part of the current collector 15 is slowly cooled while being transferred toward the coating member 130, the edge of the current collector 15 is annealed and thus yield stress and residual stress thereof decrease while an elongation ratio thereof increases.

A cooling time is controlled by a length of path between the heating member 110 and the coating member 130. But a cooling method described above is provided only by way of example and thus a cooling method of the present invention is not limited to the above configuration.

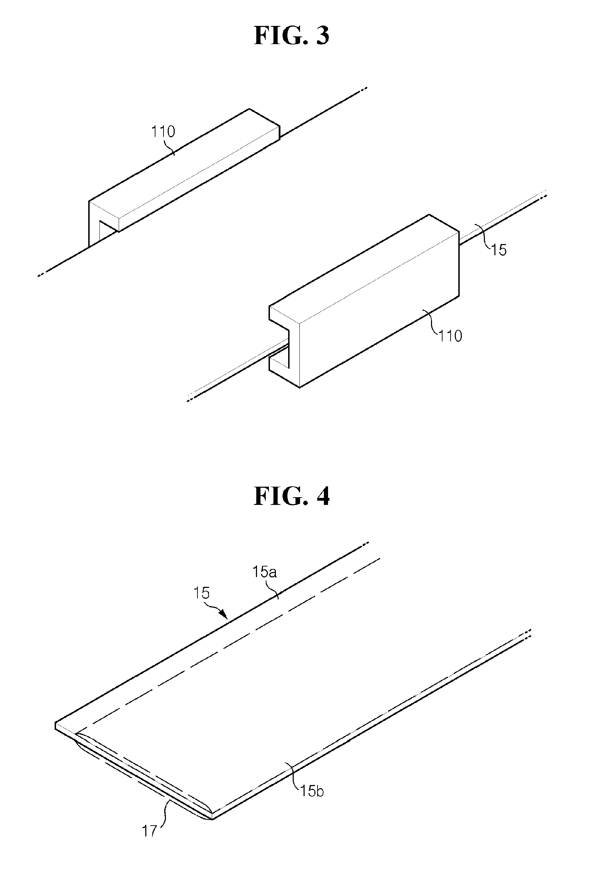

Referring to FIG. 3, two heating members 110 are installed to correspond to both longitudinal edges of the current collector 15. The heating members 110 are configured to heat the current collector 15 using radiant heat. When the current collector 15 is heated by radiant heat, specific portions can be heated efficiently.

The heating member 110 is provided only by way of example and thus the heating member 110 of the present invention is not limited to the above configuration. For example, the heating member 110 may be configured to heat the current collector 115 through conduction, convection, etc.

As shown in FIG. 2, the cooled current collector 15 is transferred to the roller 123 installed adjacent to the coating member 130 and coated with the active material layer 17 by the coating member 130. The current collector 15 coated with the active material layer 17 is transferred to the drying furnace 140 so that volatile ingredients contained in the active material layer 17 can be evaporated. The current collector 15 that is dried in the drying furnace 140 is then pressed flat by the pressing member 150.

FIG. 2 shows one side of current collector 15 is coated with the active material. But the electrode 10 shown in FIG. 2 is provided only by way of example and thus both side of current collector may be coated with the active material.

The current collector 15 is cut along a center thereof in a width direction and completed as the electrode 10 as shown in FIG. 1.

The electrode 10 is used as a positive electrode or a negative electrode of a battery. The positive electrode and the negative electrode are stacked on one another with a separator interposed therebetween, and then the stacked positive electrode, negative electrode, and separator are rolled up to form a jelly-roll electrode assembly.

FIG. 4 is a perspective view of a current collector according to an exemplary embodiment of the present invention.

FIG. 4 shows the current collector 15 including a coated current collector part 15b and an uncoated current collector part 15a formed at an edge of current collector 15.

In the electrode 10 of the present exemplary embodiment, the current collector 15 is annealed as described above, and thus, with reference to FIG. 4, the elongation ratio of the uncoated current collector part 15a becomes greater than that of the coated current collector part 15b. In addition, the yield stress of the uncoated current collector part 15a becomes smaller than that of the coated current collector part 15b. When the yield stress of the coated current collector part 15b is σ1 and the yield stress of the uncoated current collector part 15a is σ2, the condition of 1.5≤σ1/σ2≤7 is satisfied. When σ1/σ2 is less than 1.5, the uncoated current collector part 15a is not sufficiently elongated during the pressing process and thus the electrode 10 may be bent. When σ1/σ2 is greater than 7, the uncoated current collector part 15a is heated to an excessively high temperature, such that the structure of the uncoated current collector part 15a may be damaged.

### Experimental Example

An uncoated current collector part 15a of a positive current collector 15 formed of A1 A1050 and having a thickness of 15µm is annealed. The annealing process includes heating the positive current collector 15 to 550°C for 24 seconds and slowly cooling the anode current collector 15 to room temperature.

The current collector 15 is coated with an active material on a coated current collector part 15b and dried and pressed. A yield load and an elongation amount of the annealed uncoated current collector part 15 are measured by a tensile test. In the tensile test, a specimen is formed of the annealed uncoated current collector part 15a that has a width of 3mm and a length of 10mm.

### Comparative Example

A positive current collector formed of the A1 A1050 and having a thickness of 15µm is coated with an active material on a coated current collector part, and the positive current collector is dried and pressed.

A yield load and an amount of elongation of an uncoated current collector part are measured by a tensile test. In the tensile test, a specimen is formed of the uncoated current collector part that has a width of 3mm and a length of 10mm.

Yield load and an amount of elongation of the coated current collector part and the uncoated current collector part are measured by a tensile test. In the tensile test, a specimen is formed of the coated current collector part where active material is removed and the specimen has a width of 3mm and a length of 10mm.

**[Table 1]**

| | Elongation Amount (mm) | Yield Load (kN) |
|---|---|---|
| Coated current collector part | 0.333 | 0.010175 |
| Experimental Example (Uncoated current collector part, annealed) | 0.650 | 0.002234 |
| Comparative Example (Uncoated current collector part) | 0.309 | 0.010738 |

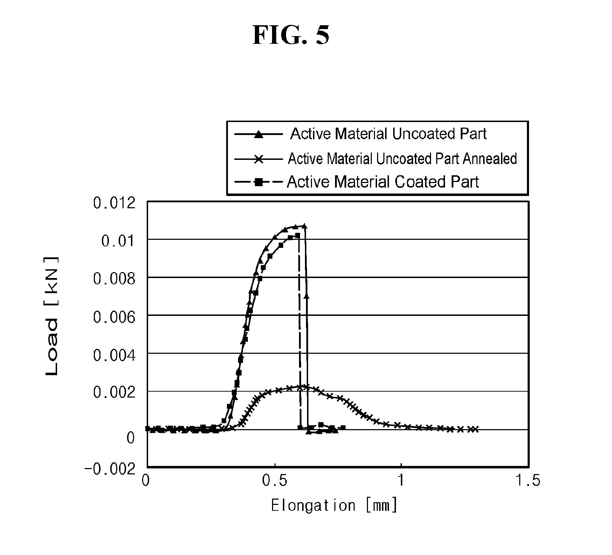

As shown in Table 1 and FIG. 5, it can be noted that, for a conventional current collector that is not annealed, the yield load of the uncoated current collector part is greater than that of the coated current collector part. In addition, the elongation amount of the coated current collector part is greater than that of the uncoated collector part.

However, for the current collector 15 that is annealed according to the present embodiment, the yield load of the uncoated current collector part 15a is significantly less than that of the coated current collector part 15b. In addition, the elongation amount of the uncoated current collector part 15a is about twice that of the coated current collector part 15b.

That is, for the conventional current collector, a yield load ratio of the yield load of the coated current collector part to the yield load of the conventional uncoated current collector part is 0.948. For the current collector of the present invention, a yield load ratio of the yield load of the coated current collector part 15b to the yield load of the uncoated current collector part 15a is 4.555.

That is, for the conventional current collector, since the coated current collector part is pressed more that the uncoated part during the pressing process, the yield load ratio is greater than 1. However, for the current collector of the present invention, since the uncoated current collector part 15a is annealed, the softness of the uncoated current collector part 15a significantly increases and the yield load becomes significantly less than the uncoated current collector part of the conventional current collector.

Since the value of a yield stress is the same as the value of a yield load divided by a cross-section of a specimen and each specimen has the same cross-section, yield stress is directly proportional to yield load. Thus, the uncoated current collector part 15a of the present invention has smaller yield stress than the coated current collector part 15b, and further, has much smaller yield stress than the conventional uncoated current collector.

Furthermore, for the conventional current collector, a ratio of an amount of elongation of the coated current collector part to an amount of elongation of the uncoated current collector part is 1.078. For the current collector 15 of the present invention, a ratio of an amount of elongation of the coated current collector part 15b to an amount of elongation of the uncoated current collector part 15a is 0.512. That is, it can be noted that, for the current collector 15 of the present invention, the amount of elongation of the uncoated current collector part 15a is significantly greater than that of the coated current collector part 15b.

Since the elongation ratio is directly proportional to the amount of elongation in same condition, the elongation ratio of the uncoated current collector part 15a is greater than that of the coated current collector part 15b.

As described above, since the uncoated current collector part 15a of the current collector 15 of the present invention has a relatively high amount of elongation even under a relatively small load, the uncoated current collector part 15a is sufficiently elongated even when a relatively high pressure is applied to the coated current collector part 15b to elongate the coated current collector part 15b. Therefore, the bending of the electrode 10, which is caused by the amount of elongation difference between the coated current collector part 15b and the uncoated current collector part 15a, can be prevented.

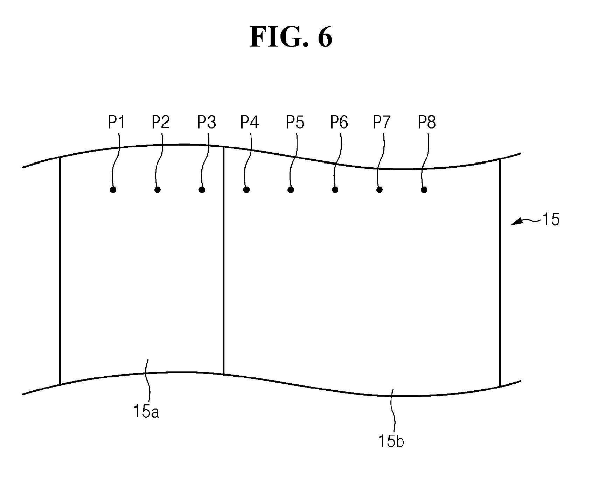

FIG. 6 is a plain view of a current collector according to an exemplary embodiment of the present invention.

Referring to FIG. 6, in which an uncoated current collector part 15a is annealed, the uncoated current collector part 15a is located at width direction end of current collector part 15 and has a width 35mm.

Points shown in FIG. 6 are locations of specimens for measuring yield load and elongation amount. Points are appointed at 10mm intervals for showing the difference of yield load between the annealed part and the not annealed part.

At each point a specimen is picked that has a width of 3.18mm and a length of 9.53mm, and a tensile test performed on the specimens.

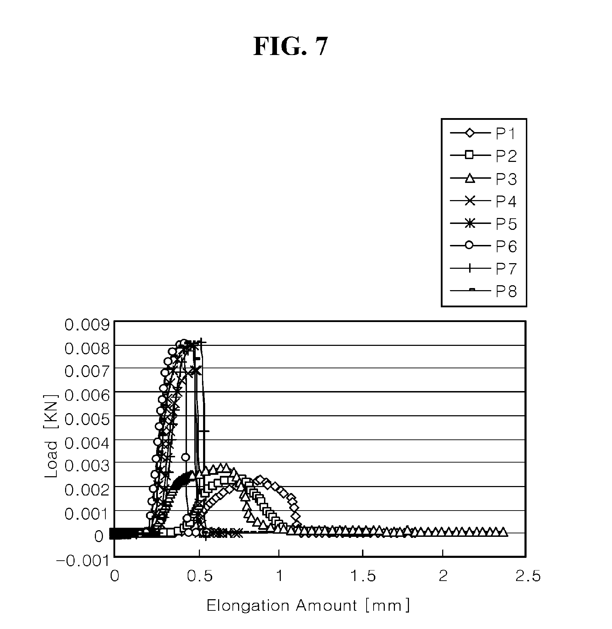

FIG. 7 shows result of the tensile test. As shown in FIG. 7, from P1 to P3 located in the annealed part have a relatively small yield load and a relatively large elongation amount, from P4 to P8 located in the not annealed part have a relatively large yield load and a relatively small elongation amount.

Referring to FIG. 7, it can be noted that the annealed part is easily elongated at small load, and the not annealed part is not easily elongated at large load.

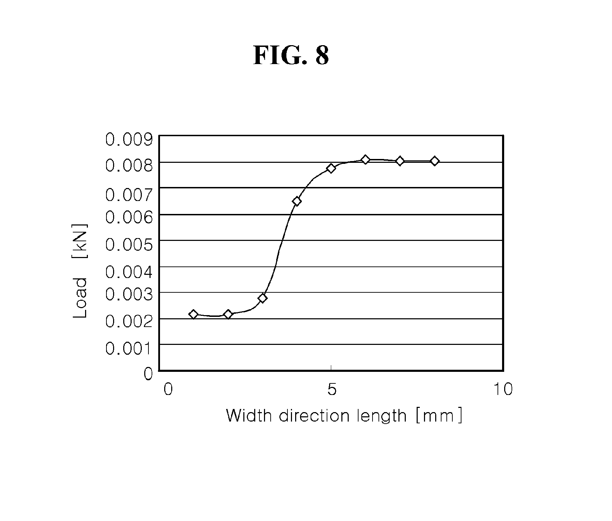

FIG. 8 shows yield load distribution along width direction of a current collector. Referring to FIG. 8, between P3 located in the annealed part and P4 located in the not annealed part, the yield load changes significantly.

According to the present invention, since the uncoated current collector part is annealed to reduce the yield stress thereof, the uncoated current collector part can be effectively elongated and thus the bending of the electrode during the pressing process can be prevented. Accordingly, the structural stability and the productivity of the electrode can be enhanced.

While this invention has been described in connection with what are presently considered to be practical exemplary embodiments, it is to be understood that the present invention is not limited to the disclosed embodiments, but, on the contrary, is intended to cover various modifications and equivalent arrangements included within the scope of the appended claims.

## Claims

1. An electrode for a battery, comprising:
a plate type current collector; wherein the current collector comprises a first current collector part coated with an active material layer and a second uncoated current collector part adjacent to the coated current collector part;
wherein the uncoated current collector part has a yield stress less than that of the coated current collector part.

2. The electrode of claim 1, wherein the uncoated current collector part has a greater elongation ratio than the coated current collector part.

3. The electrode of claim 1 or 2, wherein the uncoated current collector part has less residual stress that the current collector coated part.

4. The electrode of any one of the preceding claims, wherein, when the yield stress of the coated current collector part is σ1 and the yield stress of the uncoated current collector part is σ2, the condition of 1.5≤σ1/σ2≤7 is satisfied.

5. The electrode of any one of the preceding claims, wherein the current collector comprises aluminum.

6. The electrode of any one of claims 1 to 4, wherein the current collector comprises copper.

7. A battery comprising an electrode according to any one of the preceding claims, comprising a positive electrode and a negative electrode stacked on one another with a separator interposed therebetween, the stacked electrodes and separator being rolled up.

8. A method of fabricating an electrode, comprising:
forming a current collector;
annealing an edge of the current collector;
coating an active material on the current collector; and
pressing the current collector on which the active material has been coated.

9. The method of claim 8, wherein the annealing of the edge is performed before the active material is coated.

10. The method of claim 8, wherein the annealing of the edge is performed after the active material is coated.

11. The method of claim 8, 9 or 10, wherein the current collector is formed of aluminum.

12. The method of claim 8, 9 or 10, wherein the current collector is formed of copper.

13. The method of any one of claims 8 to 12, wherein the electrode forms either a positive electrode or a negative electrode of a battery and wherein the battery is fabricated by stacking the positive electrode and the negative electrode on one another after interposing a separator therebetween, and then rolling up the stacked electrodes and separator.

14. The method of any one of claims 8 to 13, wherein the edge of the current collector is annealed by radiant heat.
